# EUROPÄISCHE PATENTSCHRIFT

(11) **EP 3 430 317 B1**
(45) Veröffentlichungstag und Bekanntmachung des Hinweises auf die Patenterteilung: **23.09.2020**
(21) Anmeldenummer: 17710750.5
(22) Anmeldetag: 16.03.2017
(51) Int. Cl.: F24S 10/75, F24S 20/66, F24D 3/14, F24D 19/10, E04B 1/74, F24D 11/00

(54) **SYSTEM ZUM TEMPERIEREN EINES GEBÄUDES SOWIE VERFAHREN ZUM TEMPERIEREN EINES GEBÄUDES MIT EINEM SOLCHEN SYSTEM**
SYSTEM FOR CONTROLLING THE TEMPERATURE OF A BUILDING AND METHOD FOR CONTROLLING THE TEMPERATURE OF A BUILDING USING SUCH A SYSTEM
SYSTÈME DE THERMORÉGULATION D'UN BÂTIMENT AINSI QUE PROCÉDÉ DE THERMORÉGULATION D'UN BÂTIMENT UTILISANT UN SYSTÈME DE CE TYPE

(30) Priorität: 18.03.2016 CH 3782016
(43) Veröffentlichungstag der Anmeldung: 23.01.2019
(73) Patentinhaber: ATS Advanced Thermo Solutions AG, 8002 Zürich (CH)
(72) Erfinder: LEHMANN, Markus, 5610 Wohlen (CH)
(74) Vertreter: Schneider Feldmann AG Patent- und Markenanwälte
(86) Internationale Anmeldenummer: PCT/EP2017/056253
(87) Internationale Veröffentlichungsnummer: WO 2017/158100

(56) Entgegenhaltungen:
- EP-A1- 0 002 839
- EP-A2- 0 090 429
- DE-A1- 2 517 182
- FR-A1- 2 481 422
- FR-A2- 2 414 694

## Beschreibung

### Technisches Gebiet

Die Erfindung betrifft ein System zum Temperieren eines Gebäudes mit einem Innenraum, umfassend eine Wandung, die dem Innenraum zugewandt ist, sowie eine Gebäudeisolation, welche die Wandung mindestens teilweise umgibt und eine Aussenhülle, welche das Gebäude nach aussen abschliesst. Das System umfasst zudem mindestens ein erstes Rohrsystem, das zwischen der Gebäudeisolation und der Aussenhülle angebracht ist, sowie mindestens ein zweites Rohrsystem, das zwischen der Gebäudeisolation und der Wandung angebracht ist, wobei die beiden Rohrsysteme zu einem Kreislauf verbunden sind, in dem ein Fluid zirkulieren kann. Die Erfindung betrifft auch ein Verfahren zum Temperieren eines Gebäudes mit einem solchen System.

### Stand der Technik

Einerseits schreiben die heutigen Gesetze in vielen Ländern eine Aussenisolation an Gebäuden vor, um den Energieverbrauch zum Heizen resp. zum Kühlen zu reduzieren, andererseits ist auch das ökologische Verantwortungsbewusstsein vieler Hausbesitzer heute derart ausgeprägt, dass inzwischen auch immer mehr ältere Gebäude mit einer Gebäudeisolation versehen werden. Nun trifft aber auch Sonnenenergie auf solche Gebäude ein, die wegen der guten Isolation die Gebäude nicht oder nur stark reduziert erwärmt. Um diese Energie auch noch zu nutzen, werden in der Regel die Dächer der Gebäude mit Sonnenkollektoren versehen, welche Warmwasser erzeugen, oder mit Photovoltaik Modulen, um elektrische Energie zu erzeigen. Leider sind solche Komponenten sehr teuer, da ein Grossteil der Kosten für den Transport und die Speicherung der thermischen Energie anfällt. Die heutigen Systeme weisen zwar einen hohen Wirkungsgrad auf, sind jedoch mit einem relativ grossen baulichen Aufwand verbunden. Zudem ist es mit den hier genannten Systemen nicht möglich, die Temperatur im Innenraum eines Gebäudes zu senken, ausser man betreibt mit dem erzeugten Strom eine Klimaanlage. Dies bedingt eine erneute Anschaffung und Installation, braucht Platz und wird oft als lärmig empfunden.

In heissen Gebieten kann die kühlere Nachtluft verwendet werden, um die Innenraumtemperaturen der Gebäude nachts wieder zu senken. Leider ist es nicht immer möglich, die Fenster zu öffnen. In Bürogebäuden stellen offene Fenster eine Gefahr vor Sturm und Gewittern dar, wenn die Fenster nicht rechtzeitig geschlossen werden. Zudem stellen offene Fenster eine grosse Einbruchgefahr da. In anderen Gebäuden lassen sich die Fenster aus technischen Gründen nicht öffnen, sei es wegen einem optimierten Belüftungssystem, das ein Lüften untersagt, oder wegen akuter Sturzgefahr bei sehr hohen Gebäuden. Wieder andere Gebäude verfügen aus ästhetischen Gründen über keine öffenbare Fenster, beispielsweise wenn diese mit einer einheitlichen Fassade bedeckt sind.

Aus der EP00025839 ist ein solches System bekannt, bei dem die Wärme, die mit Hilfe eines Rohrsystem aus der Aussenfassade entzogen wird, an die Oberfläche der inneren Wandung wieder abgegeben wird. Dieses Dokument offenbart ein System mit den Merkmalen des Oberbegriffs des Anspruchs 1. Auch in der FR2481422 sowie in der FR 7801085 werden solche Systeme beschrieben, bei dem die Rohre, durch welche das Fluid fliesst, mittig in den Gemäuern beidseitig einer Isolation angeordnet sind.

Ähnlich ist auch die Situation, die in der DE2517182 beschrieben ist, wobei die Rohrsysteme jeweils nur durch den Verputz vom Gebäudeinnenraum resp. von der Aussenwelt getrennt angeordnet sind. Zwischen diesen Rohrsystemen liegt die Wandung, welche das Gebäude trägt, sowie verschiedene Isolationen.

Schliesslich ist in der EP 0090429 ein weiteres, anderes System beschrieben, welches mittels eines Verdampfers Solarzellen abkühlen soll, um deren Wirkungsgrad zu verbessern. Die so gewonnene Wärme soll direkt in die Innenräume angegeben werden.

Alle beschriebenen Systeme haben den Nachteil, dass sie sehr aufwendig zum Bauen sind, wenn die Gebäude bereits bestehen und mit einem Temperiersystem aufgerüstet werden sollen.

### Darstellung der Erfindung

Aufgabe der vorliegenden Erfindung ist es, ein System zur thermischen Nutzung der äusseren, atmosphärischen Bedingungen zu beschreiben, mit dem die Raumtemperatur im Innenraum des Gebäudes gemäss den jeweiligen Wünschen der Nutzer verbessert werden kann. Zudem soll ein Verfahren angegeben werden, welches ein solches System betreibt.

Die Aufgabe wird gelöst durch die Kennzeichen der unabhängigen Patentansprüche.

Die der Erfindung zugrundeliegende Idee besteht darin, dass das erste Rohrsystem in der Gebäudeisolation, angrenzend an die Aussenhülle angerbracht ist, und/oder dass das zweite Rohrsystem in der Gebäudeisolation, angrenzend an die Wandung oder in der Wandung, angrenzend an die Gebäudeisolation angebracht ist.

Beim erfindungsgemässen Verfahren zum Temperieren eines Gebäudes unter Verwendung eines erfindungsgemässen Systems wird das Fluid im Kreislauf zur Zirkulation gebracht, beispielsweise durch eine Pumpe oder durch Konvektion, wobei das Fluid Wärme aus der Umgebung eines ersten oder zweiten Rohrsystems aufnimmt und in die Umgebung des anderen, des zweiten oder ersten Rohrsystems wieder abgibt.

In der erfindungsgemässen Anordnung befinden sich beide Rohrsysteme unmittelbar angrenzend beidseitig an die Gebäudeisolation oder in diese am jeweiligen Rand eingelegt, sodass keine Wandung zwischen ihnen liegt. Es hat sich gezeigt, dass die thermische Nutzung und das Raumklima im Innenraum in dieser Anordnung verbessert sind gegenüber herkömmlichen Anordnungen. Zudem ist die Anbringung solcher Systeme sehr einfach, insbesondere wenn erst das zweite, innere Rohrsysteme jeweils von aussen in die bestehende Wandung, beispielsweise in ein Mauerwerk oder in eine Wand aus einer Holzkonstruktion eingelegt wird, und anschliessend eine Gebäudeisolation darauf angeordnet wird, in welche wiederum das erste, äussere Rohrsystem von aussen eingelegt wird. Zum Einlegen der Rohrsysteme werden mit geeigneten Maschinen entsprechende Schlitze in die Wandung resp. in die Gebäudeisolation eingebracht, welche die Rohrsysteme aufnehmen können.

In einer verbesserten Ausführung wird jedes Rohrsystem, das vorzugsweise in Schleifen verlegt ist, jeweils mittels Wärmeleitplatten zu einer grösseren Wirkungsfläche ausgestaltet, um die Wirkung der Wärmeaufnahme resp. Wärmeabgabe vergrössern zu können. Diese Flächen können miteinander zu einer grossen Fläche verbunden sein. Zu diesem Zweck können jeweils vorgeformte Bleche mit einer U-Form und daran angeformten Lamellen (etwa entsprechend einer Omega-Form Ω) an die Wandung resp. an die Gebäudeisolation angebracht werden, welche im Bereich der zuvor in der Wandung resp. in der Gebäudeisolation angebrachten Schlitze die U-förmigen Auswölbungen aufweisen, in welche die Rohre eingelegt werden können. So ist der äussere Abschluss jedes Rohrsystems jeweils flach ausgestaltet, was die Anbringung der jeweils nächsten Schicht, namentlich der Gebäudeisolation resp. der Aussenhülle, erleichtert, da die mit den Rohrsystemen aufgerüsteten Flächen nach aussen hin flach ausgestaltet sind.

Im Winter oder, allgemein ausgedrückt, wenn Wärmebedarf herrscht wärmt sich erfindungsgemäss das Fluid im ersten Rohrsystem auf, wenn die Sonne die Fassade bestrahlt. Die so gewonnene Wärme kann in die Wandung eingebracht werden, indem das erwärmte Fluid das zweite Rohrsystem durchströmt, das dem Innenraum, zugewandt ist. Auf diese Weise wird die Wärme auf die andere Seite der Gebäudeisolation, in die Wandung und schliesslich in den Innenraum eingebracht, indem die Wärme von der Wandung aus in den Innenraum abgestrahlt wird. Bevorzugt wird die Wärme an einer Wand oder in einem Dachbereich mit viel Sonneneinstrahlung aufgenommen und in eine Wandung geleitet, die kaum von der Sonne bestrahlt wird. Durch die Erwärmung der Wandung stellt sich automatisch ein angenehmes Raumklima ein, weil keine Wärmequelle wie ein Radiator oder ein Heizlüfter ein Temperaturgefälle im Innenraum generiert und weil kein Lärm erzeugt wird. Zudem wird der Innenraum durch die erfindungsgemässe Massnahme nicht verändert, wie dies beispielsweise ein Radiator tut, indem er Stellfläche belegt.

Im Sommer oder, allgemein ausgedrückt, wenn Kühlbedarf herrscht kann die kühle Nachtluft verwendet werden, um den wärmeren Innenraum zu kühlen. Das Fluid nimmt in diesem Fall die Wärme im zweiten Rohrsystem auf und gibt sie im ersten Rohrsystem wieder ab, womit das Fluid als Zwischenspeicher eingesetzt ist.

Alternativ dazu kann die so gewonnene Wärme auch zwischengespeichert werden und zu einem späteren Zeitpunkt wieder dem Gebäude zugefügt werden. Zudem können dem Kreislauf auch weitere thermische Komponenten angeschlossen werden, die vorzugsweise mit einer intelligenten Steuerung betrieben werden.

### Kurze Beschreibung der Zeichnungen

Im Folgenden wird die Erfindung mit Bezug auf die Zeichnungen näher erklärt. Es zeigen
- Fig. 1: eine schematische Schnitt-Darstellung eines erfindungsgemässen Systems, das an einem Gebäude installiert ist und Wärme vom Aussenbereich in einem Fluid aufnimmt;
- Fig. 2: eine schematische Schnitt-Darstellung gemäss Fig. 1, das die Wärme im Fluid in die Wandung und somit in den Innenraum abgibt;
- Fig. 3: eine schematische Schnitt-Darstellung eines erfindungsgemässen Systems, wobei weitere Orte von Rohrsystemen sowie Zusatzkomponenten angegeben sind.
- Fig. 4: Wärmeleitplatten

### Wege zur Ausführung der Erfindung

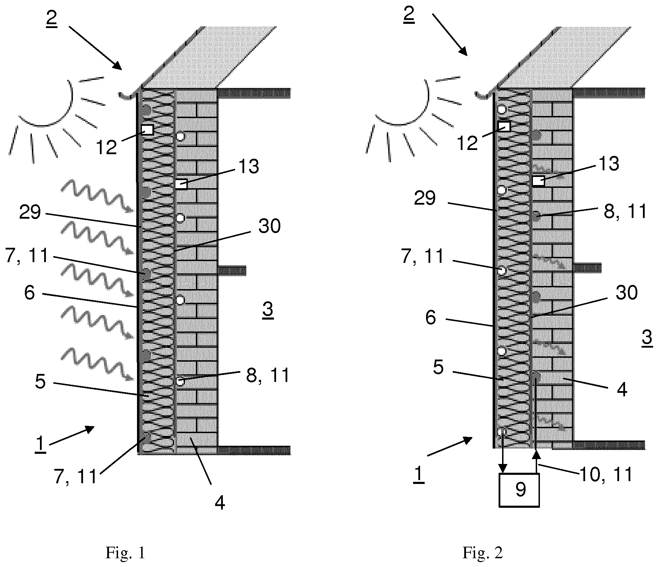

Die Fig. 1 zeigt ein Teil eines Gebäudes 2 im Schnitt, an dem das erfindungsgemässe System 1 installiert ist. Das Gebäude 2 umfasst einen Innenraum 3, der von einer Wandung 4 umgeben ist. Diese Wandung 4 kann beispielsweise ein Mauerwerk oder eine Holzkonstruktion sein und ist in der Regel die tragende Struktur des Gebäudes 2. Als Wandung 4 kann aber auch ein Decken- oder Bodenelement bezeichnet werden, das an den Innenraum 3 angrenzt. Die Wandung 4 kann senkrecht oder horizontal sein oder in einem beliebigen Neigungswinkel verlaufen. Insbesondere kann die Wandung 4 beispielsweise massehaltige Steine wie Betonsteine oder Backsteine umfassen, welche dank ihrer grossen Wärmespeichermasse vorteilhaft sind.

Ausserhalb der Wandung 4 ist eine Gebäudeisolation 5 angebracht, welche vorzugsweise die gesamte Wandung 4 des Gebäudes 2 umgibt. Sie kann aber auch nur teilweise angebracht sein und nur die Wände, nur das Dach und/oder nur Teile davon isolieren. Ausserhalb der Gebäudeisolation 5 ist eine Aussenhülle 6 angebracht, welche das Gebäude nach aussen abschliesst und auch für das Erscheinungsbild des Gebäudes verantwortlich ist. Die Aussenhülle 6 kann Putz, Schiefer, Schindeln, Textil, Faserzement, ein Blech oder Verkleidungsplatten sein, wobei auch Kombinationen der genannten Aussenhüllen 6 möglich sind. Insbesondere kann die Aussenhülle 6, wenn sie ein Dach abdeckt, auch aus Ziegeln sein oder, im Falle eines Flachdachs, ein Flachdach Belag, beispielsweise ein Blech, Humus für eine Begrünung oder eine Folienabdeckung. Es sind hier jeweils nur einige Beispiele genannt.

Der Boden als Wandung 4 hat in diesem Sinne nur dann eine Aussenhülle 6 zur Umgebungsluft, wenn er überstehend und daher von Aussenluft umgeben ist. Andernfalls ist das Erdreich als Aussenhülle 6 zu verstehen. Auch andere Wandungen 4, welche nicht an die Aussenluft grenzen, weil sie beispielsweise an weitere Gebäude oder ans Erdreich 22 angebaut sind, haben an diesen Stellen keine direkte Aussenhülle 6.

Das Gebäude 2 ist mit einem System 1 ausgerüstet, welches erlaubt, das Gebäude 2 zu temperieren. Dieses System 1 umfasst ein erstes Rohrsystem 7 und ein zweites Rohrsystem 8, die, vorzugsweise zusammen mit einer Pumpe 9, zu einem Kreislauf 10 zusammengeschlossen sind, in dem ein Fluid 11 zirkulieren kann. Alternativ kann die Zirkulation auch durch Konvektion angeregt werden.

Beim erfindungsgemäss System 1 ist das erste Rohrsystem 7 zwischen der Gebäudeisolation 5 und der Aussenhülle 6 und das zweite Rohrsystem 8 zwischen der Gebäudeisolation 5 und dem Innenraum 3 angebracht, genauer gesagt zwischen der Gebäudeisolation 5 und der Wandung 4. Beide Rohrsysteme7, 8 befinden sich somit ausserhalb der Wandung 4, beidseitig der Gebäudeisolation 5.

Ein solches System erlaubt eine Zirkulation des Fluids 11, bei der Wärme aus der Umgebung in den Innenraum oder umgekehrt transportiert werden kann. In Fig. 1 ist dargestellt, wie die Sonne die Aussenhülle 6 des Gebäudes 2 erwärmt. Da das erste Rohrsystem 7 vorzugsweise dicht unter der Aussenhülle 6 angebracht ist, erwärmt sich das im ersten Rohrsystem 7 zirkulierende Fluid 11, das beispielsweise durch die Pumpe 9 zur Zirkulation angetrieben wird.

In Fig. 2 ist dargestellt, wie das Fluid 11, das durch die Sonneneinstrahlung erwärmt wurde, anschliessend im zweiten Rohrsystem 8 zirkuliert. Das Fluid 11 ist wieder angetrieben durch die Pumpe 9 oder durch Konvektion. Nun wird die Wärme vom Fluid 11 an die Wandung 4 abgegeben, die sich dadurch langsam erwärmt. Durch die Erwärmung der Wandung 4 und durch Abstrahlung dieser Wärme wird schliesslich auch der Innenraum 3 erwärmt, wodurch das Raumklima verbessert wird.

Im umgekehrten Fall wird der Innenraum 3 gekühlt. Dies ist dann der Fall, wenn die Innenraumtemperatur höher ist als die Aussentemperatur, was beispielsweise in heissen Gebieten nachts der Fall ist. Das Fluid 11 nimmt dann im zweiten Rohrsystem 8 die Wärme aus dem Innenraum 3 auf und transportiert sie im Kreislauf 10 auf die Aussenseite des Gebäudes 2, wo es die Wärme im ersten Kreislauf 7 wieder an die Umgebung abgibt. So kann der Innenraum eines Gebäudes nachts gekühlt werden, ohne dass die Fenster geöffnet werden müssen.

Erfindungsgemäss ist das erste Rohrsystem 7 in der Gebäudeisolation 5 angrenzend an die Aussenhülle 6 angerbracht, beispielsweise in einer dafür vorgesehenen Vertiefung. Dadurch ist sie Aussenwand der Gebäudeisolation 5 eben und kann einfach mit der Aussenhülle versehen werden. Alternativ oder zusätzlich kann das zweite Rohrsystem 8 in der erfindungsgemässen Ausgestaltung in der Gebäudeisolation 5 angebracht sein, wiederum in einer Vertiefung. Diese grenzt dann eben an die Wandung 4 an. So können eine oder beide der Rohrsysteme 7, 8 in der jeweils äusseren Oberfläche der Gebäudeisolation 5 verlegt sein, bevor diese an die Wandung angebracht wird. Auf die Anschlüsse muss geachtet werden.

Eine weitere Alternative besteht darin, das zweite Rohrsystem 8 an der äusseren Oberfläche der Wandung 4, angrenzend an die Gebäudeisolation 5 anzubringen. Dazu werden entsprechende Kanäle in der Wandung 4 geformt, damit die Oberfläche der Wandung 4 wiederum eben ist, zum einfachen Anbringen der Gebäudeisolation. Die bevorzugte Anordnung besteht darin, dass das erste Rohrsystem 7 in der Gebäudeisolation 5 und das zweite Rohrsystem 8 in der Wandung 4 angeordnet ist, angrenzend an die Gebäudeisolation 5, sodass keine Wandung 4 zwischen den Rohrsystemen 7, 8 liegt.

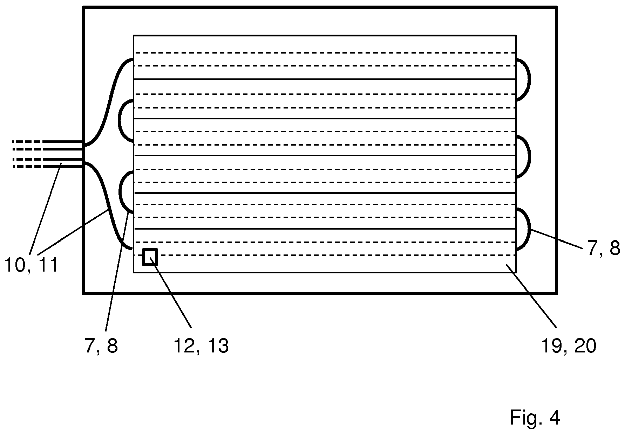

Um den Wärmeaustausch zwischen dem Fluid 11 im ersten Rohrsystem 7 und der Aussenluft, resp. zwischen dem Fluid 11 im zweiten Rohrsystem 8 und der Wandung 4, die zum Innenraum 3 gerichtet ist, zu fördern, werden mindestens ein erstes und/oder mindestens ein zweites Rohrsysteme 7, 8 mittels ersten resp. zweiten Wärmeleitplatten 19, 20 zu jeweils grösseren Wirkungsflächen ausgestaltet. Diese können nach Bedarf zu einer Ebene verbunden werden, wie schematisch in Fig. 4 dargestellt. Solche Wärmeleitplatten 19, 20 sind vorzugsweise aus einem wärmeleitenden Material, das beispielsweise Aluminium umfasst, und derart geformt, dass sie das entsprechende Rohrsystem 7, 8 mindestens teilweise umhüllen und mit diesem eine grosse Kontaktfläche bilden. So kann die Wärme gut von den Wärmeleitplatten 19, 20 in die Fluide 11 abfliessen und umgekehrt. Die ebenen Flächen der Wärmeleitplatten 19, 20 begünstigen den Wärmeaustausch mit ihrer Umgebung, beispielsweise mit der Wandung 4 oder über die Aussenhülle 6 mit der Aussenluft. Dazu ist es vorteilhaft, wenn die ersten Wärmeleitplatten 19 an der Aussenhülle 6 und/oder die zweiten Wärmeleitplatten 20 an der Wandung 4 flächig anliegen. Die Aussenhülle 6 kann insbesondere eine Verkleidung einer Aussenfassade, Ziegel eines Daches, oder eine Abdeckung eines Flachdaches sein.

Um den Betrieb zu optimieren und die Fluidzirkulation zu regeln werden vorzugsweise ein erster Temperaturfühler 12 im ersten Rohrsystem 7 und ein zweiter Temperaturfühler 13 im zweiten Rohrsystem 8 angebracht. Zusammen mit einer Steuerung 14, welche mit dem ersten und dem zweiten Temperaturfühler 12, 13 sowie mit der Pumpe 9 verbunden ist, kann die Temperierung des Gebäudes 2 geregelt werden. Die Steuerung 14 kann feststellen, wann der Temperaturunterschied in den beiden Rohrsystemen 7, 8 genügend gross ist, damit sich der Betrieb lohnt, und schaltet entsprechend die Pumpe 9 ein. Wenn der Temperaturunterschied aber wieder zu klein wird, schaltet die Steuerung 14 die Pumpe 9 wieder ab.

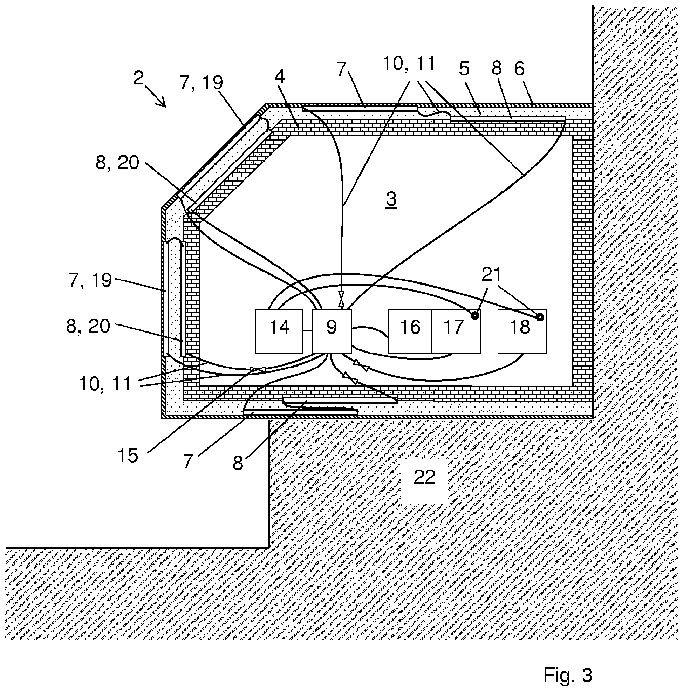

In Fig. 3 ist schematisch ein Gebäude 2 mit einem bevorzugten erfindungsgemässen System 1 dargestellt. Es wurde darauf verzichtet, alle Details darin aufzuführen. Fig. 3 zeigt einige Möglichkeiten der Anordnung der ersten und zweiten Rohrsysteme 7, 8, die aber auch in Serie miteinander verbunden sein können. Zudem können weit entfernte erste und zweite Rohrsysteme 7, 8 miteinander verbunden sein, oder es kann jedes Rohrsystem 7, 8 einzeln mit einem Ventil angesteuert werden, wobei ein nicht gezeichnetes Verteilsystem das Fluid 11 anschliessend intelligent verteilt. Jedes Rohrsystem 7, 8 kann auch als ein mit Wärmeleitplatten 19, 20 verbundenes Rohrsystem 7, 8 aufgefasst werden.

Ein bevorzugtes System 1 zum bedarfsweisen Temperieren des Gebäudes 2 gemäss Fig. 3 umfasst zudem weitere erste und/oder zweite Rohrsysteme 7, 8 mit jeweils weiteren ersten und/oder zweiten Temperaturfühlern 12, 13, wie in Fig. 3 dargestellt, wobei alle ersten und zweite Rohrsysteme 7, 8 durch Ventile 15 mit dem Kreislauf 10 verbunden sind. Zudem ist die Steuerung 14 ebenfalls mit allen ersten und zweiten Temperaturfühlern 12, 13 und mit allen Ventilen 15 verbunden.

Je nach Bedarf der Innentemperatur, insbesondere, wenn nicht alle Räume genutzt werden, und je nach Besonnung der Gebäudeflächen, die mit einem ersten Rohrsystem 7 ausgestattet sind, können jederzeit gezielt ausgewählte innere und äussere Rohrsysteme 7, 8 in Betrieb genommen werden.

Zusätzlich kann in einer bevorzugten Ausgestaltung der Erfindung das System 1 resp. der Kreislauf 10 einen Wärmetauscher 16 und einen Wärmespeicher 17 umfassen, zum Speichern der vom System 1 aufgenommenen Wärme und zum Abgeben der im Wärmespeicher 17 gespeicherten Wärme zu einem späteren Zeitpunkt. So kann die aufgenommene Wärme auch später abgegeben werden. Dies ist insbesondere in der Übergangszeit (Frühling, Herbst) oder in Gebieten mit gemässigten Temperaturen sehr hilfreich, wenn die Tage eigentlich genügend warm sind, an den Abenden aber doch Wärme eingebracht werden sollte. Die tagsüber aufgenommene Wärme kann mit einem solchen System 1 einige Stunden gespeichert und später erst wieder abgegeben werden. Die Steuerung 14 kann mit Hilfe weiterer Ventile 14 und Thermofühlern 21, beispielsweise am Wärmespeicher 17, die gewünschte Wärmeaufnahme, Zwischenspeicherung und Abgabe regeln.

Zudem können am Kreislauf 10 mindestens eine oder mehrere weitere thermoaktive Komponenten 18 mit zusätzlichen Ventilen 14 und Thermofühlern 21 angeschlossen sein, um den Wärmehaushalt des Gebäudes 2 zu optimieren und dabei die Energiekosten zu senken. Thermoaktive Komponenten 18 können insbesondere eine Wärmepumpe, ein Sonnenkollektor, ein Erdregister, und/oder ein vorhandenes Heiz- oder Kühlsystem sein.

Beim erfindungsgemässen Verfahren zum Temperieren eines Gebäudes 2 unter Verwendung eines System 1 bringt die Pumpe 9 oder Konvektion das Fluid 11 im Kreislauf 10 zur Zirkulation, wobei das Fluid 11 Wärme aus der Umgebung eines ersten oder zweiten Rohrsystems 7, 8 aufnimmt und in die Umgebung des anderen, des zweiten oder ersten Rohrsystems 8, 7 wieder abgibt. Somit kann der Innenraum 3 je nach Bedarf beheizt oder abgekühlt werden.

In einem bevorzugten Verfahren wird ein System 1 mit zusätzlichen ersten und zweiten Temperaturfühlern 12, 13, Ventilen 15 sowie einer Steuerung 14 verwendet. Die Steuerung 14 steuert die Ventile 15 dabei derart an, dass die Raumtemperatur im Innenraum 3 einer Vorgabe gemäss den jeweiligen Bedürfnissen angenähert wird.

In einem erweiterten bevorzugten Verfahren wird ein System 1 verwendet, das zusätzlich einen Wärmetauscher 16 und einen Wärmespeicher 17 und/oder mindestens eine weitere thermoaktive Komponente 18 mit entsprechenden weiteren Thermofühlern 21 und Ventilen 15 aufweist. Bei diesem Verfahren steuert die Steuerung 14 die Ventile 15 derart an, dass die in den ersten oder zweiten Rohrsystemen 7, 8 aufgenommene thermische Energie intelligent zwischengelagert und verwendet wird.

### Bezugszeichenliste

- 1: System
- 2: Gebäude
- 3: Innenraum
- 4: Wandung
- 5: Gebäudeisolation
- 6: Aussenhülle
- 7: Erstes Rohrsystem
- 8: Zweites Rohrsystem
- 9: Pumpe
- 10: Kreislauf
- 11: Fluid
- 12: Erster Thermofühler
- 13: Zweiter Thermofühler
- 14: Steuerung
- 15: Ventil
- 16: Wärmetauscher
- 17: Wärmespeicher
- 18: Thermoaktive Komponente
- 19: Erste Wärmeleitplatte
- 20: Zweite Wärmeleitplatte
- 21: Thermofühler
- 22: Erdreich oder weiteres Gebäude

## Patentansprüche

1. System (1) zum Temperieren eines Gebäudes (2) mit einem Innenraum (3) umfassend eine Wandung (4), die dem Innenraum (3) zugewandt ist, sowie eine Gebäudeisolation (5), welche die Wandung (4) mindestens teilweise umgibt, und eine Aussenhülle (6), welche das Gebäude (2) nach aussen abschliesst, wobei das System (1) zudem mindestens ein erstes Rohrsystem (7) umfasst, das zwischen der Gebäudeisolation (5) und der Aussenhülle (6) angebracht ist, sowie mindestens ein zweites Rohrsystem (8), das zwischen der Gebäudeisolation (5) und der Wandung (4) angebracht ist, wobei die beiden Rohrsysteme (7, 8) zu einem Kreislauf (10) verbunden sind, in dem ein Fluid (11) zirkulieren kann, **dadurch gekennzeichnet, dass** das erste Rohrsystem (7) in der Gebäudeisolation (5), unmittelbar angrenzend an die Aussenhülle (6) angebracht ist, und/oder dass das zweite Rohrsystem (8) in der Gebäudeisolation (5), unmittelbar angrenzend an die Wandung (4) oder in der Wandung (4), unmittelbar angrenzend an die Gebäudeisolation (5) angebracht ist, sodass keine Wandung (4) zwischen den Rohrsystemen (7, 8) liegt.

2. System nach einem der vorhergehenden Ansprüche, **dadurch gekennzeichnet, dass** mindestens ein erstes Rohrsystem (7) jeweils mittels Wärmeleitplatten (19) zu einer grösseren Wirkungsfläche, vorzugsweise zu einer Ebene verbunden sind und/oder mindestens ein zweites Rohrsystem (8) jeweils mittels Wärmeleitplatten (20) zu einer grösseren Wirkungsfläche, vorzugsweise zu einer Ebene verbunden sind, um den Wärmeaustausch zu fördern.

3. System nach Anspruch 2, **dadurch gekennzeichnet, dass** die Wärmeleitplatten (19) des ersten Rohrsystems (7) flächig an der Aussenhülle (6) anliegen und/oder dass die Wärmeleitplatten (20) des zweiten Rohrsystems (8) flächig an der Wandung (4) anliegen.

4. System nach einem der vorhergehenden Ansprüche, **dadurch gekennzeichnet, dass** der Kreislauf (10) mit mindestens einer Pumpe (9) versehen ist.

5. System nach Anspruch 4, **dadurch gekennzeichnet, dass** das erste Rohrsystem (7) einen ersten Temperaturfühler (12) und das zweite Rohrsystem (8) einen zweiten Temperaturfühler (13) aufweist, und wobei das System (1) zudem eine Steuerung (14) aufweist, welche mit dem ersten und zweiten Temperaturfühler (12, 13) und der Pumpe (9) verbunden ist, zum Regeln der Fluidzirkulation.

6. System nach Anspruch 5, **dadurch gekennzeichnet, dass** das Gebäude (2) weitere erste und/oder zweite Rohrsysteme (7, 8) mit ersten und zweiten Temperaturfühlern (12, 13) aufweist, wobei alle Rohrsysteme (7, 8) durch Ventile (15) mit dem Kreislauf (10) verbunden sind und wobei die Steuerung (14) mit allen Temperaturfühlern (12, 13) und Ventilen (15) verbunden ist, zum Temperieren des Gebäudes (2) nach Bedarf.

7. System nach einem der vorhergehenden Ansprüche, **gekennzeichnet durch** einen Wärmetauscher (16) und einen Wärmespeicher (17), zum Speichern der vom System (1) aufgenommenen Wärme und zum Abgeben der im Wärmespeicher (17) gespeicherten Wärme zu einem späteren Zeitpunkt.

8. System nach einem der vorhergehenden Ansprüche, **dadurch gekennzeichnet, dass** am Kreislauf (10) mindestens eine weitere thermoaktive Komponente (18) angeschlossen ist, insbesondere eine Wärmepumpe, ein Sonnenkollektor, ein Erdregister, und/oder ein vorhandenes Heiz- oder Kühlsystem.

9. System nach einem der vorhergehenden Ansprüche, **dadurch gekennzeichnet, dass** die Aussenhülle (6) eine Verkleidung einer Aussenfassade, Ziegel eines Daches, oder eine Abdeckung eines Flachdaches ist.

10. Verfahren zum Temperieren eines Gebäudes (2) unter Verwendung eines Systems (1) nach einem der vorhergehenden Ansprüche, **dadurch gekennzeichnet, dass** das Fluid (11) im Kreislauf (10) durch Konvektion oder mittels einer Pumpe (9) zur Zirkulation gebracht wird, wobei das Fluid (11) Wärme aus der Umgebung eines Rohrsystems (7, 8) aufnimmt und in die Umgebung des anderen Rohrsystems (8, 7) wieder abgibt.

11. Verfahren nach Anspruch 10 unter Verwendung eines Systems (1), das zusätzlich die Merkmale nach Anspruch 5 aufweist, **dadurch gekennzeichnet, dass** die Steuerung (14) die Ventile (15) derart ansteuert, dass die Raumtemperatur im Innenraum (3) einer Vorgabe angenähert wird.

12. Verfahren nach Anspruch 10 oder 11 unter Verwendung eines Systems (1), das zusätzlich die Merkmale nach Anspruch 5 sowie nach Anspruch 6 oder 7 aufweist, **dadurch gekennzeichnet, dass** die Steuerung (14) die Ventile (15) derart ansteuert, dass die in den ersten oder zweiten Rohrsystemen (7, 8) aufgenommene thermische Energie intelligent zwischengelagert und verwendet wird.

## Claims

1. A system (1) for the temperature regulation of a building (2), comprising an interior (3) and a walling (4) facing the interior (3), as well as a building insulation (5) at least partly surrounding the walling (4), and an outer shell (6) which closes off the building (2) to the outside, wherein the system (1) further comprises at least one first pipe system (7) which is attached between the building insulation (5) and the outer shell (6), as well as at least one second pipe system (8) which is attached between the building insulation (5) and the walling (4), wherein the two pipe systems (7, 8) are connected into a circuit (10), in which a fluid (11) can circulate, **characterised in that** the first pipe system (7) is attached in the building insulation (5) in a manner directly adjacent to the outer shell (6), and/or that the second pipe system (8) is attached in the building insulation (5) in a manner directly adjacent to the walling (4) or in the walling (4) in a manner directly adjacent to the building insulation (5), so that no walling (4) lies between the pipe systems (7, 8).

2. A system according to one of the preceding claims, **characterised in that** at least one first pipe system (7) is connected in each case by way of thermally conductive plates (1) into a larger active surface, preferably into a plane, and/or at least one second pipe system (8) is connected in each case by way of thermally conductive plates (20) into a larger active surface, preferably into a plane, in order to promote the heat exchange.

3. A system according to claim 2, **characterised in that** the thermally conductive plates (1) of the first pipe system (7) bear in a surfaced manner on the outer shell (6) and/or that the thermally conductive plates (20) of the second pipe system (8) bear in a surfaced manner on the walling (4).

4. A system according to one of the preceding claims, **characterised in that** the circuit (10) is provided with at least one pump (9).

5. A system according to claim 4, **characterised in that** the first pipe system (7) comprises a first temperature probe (12) and the second pipe system (8) comprises a second temperature probe (13), and wherein the system (1) moreover comprises a control (14) which is connected to the first and the second temperature probe (12, 13) and to the pump (9), for regulating the fluid circulation.

6. A system according to claim 5, **characterised in that** the building (2) comprises further first and/or second pipe systems (7, 8) with first and second temperature probes (12, 13), wherein all pipe systems (7, 8) are connected to the circuit (10) by way of valves (15) and wherein the control (14) is connected to all temperature probes (12, 13) and valves (15), for temperature regulating the building (2) when required.

7. A system according to one of the preceding claims, **characterised by** a heat exchanger (16) and a heat reservoir (17), for storing the heat which is taken up by the system (1), and for releasing the heat stored in the heat reservoir (17), at a later point in time.

8. A system according to one of the preceding claims, **characterised in that** at least one further thermoactive component (18), in particular a heat pump, a solar collector, geothermal heat collector and/or an existing heating or cooling system, is connected to the circuit (10).

9. A system according to one of the preceding claims, **characterised in that** the outer shell (6) is a cladding of an outer façade, tiles of a roof or a covering of a flat roof.

10. A method for the temperature regulation of a building (2) whilst using a system (1) according to one of the preceding claims, **characterised in that** the fluid (11) in the circuit (10) is brought into circulation by way of convection or by way of a pump (9), wherein the fluid (11) absorbs heat from the environment of a pipe system (7, 8) and dissipates it again into the environment of the other pipe system (7, 8).

11. A method according to claim 10, whilst using a system (1) which additionally comprises the features according to claim 5, **characterised in that** the control (14) activates the valves (15) in a manner such that the room temperature in the interior (3) approaches a setting.

12. A method according to claim 10 or 11 whilst using a system (1) which additionally comprises the features according to claim 5 as well as claim 6 or 7, **characterised in that** the control (14) activates the valves (15) in a manner such that the thermal energy absorbed in the first or second pipe systems (7, 8) is intelligently intermediately stored and used.

## Revendications

1. Système (1) de thermorégulation d'un bâtiment (2) avec un espace intérieur (3) comprenant une paroi (4), qui est tournée vers l'espace intérieur (3), ainsi qu'une isolation de bâtiment (5), laquelle entoure au moins en partie la paroi (4) et une enveloppe extérieure (6), laquelle ferme le bâtiment (2) vers l'extérieur, sachant que le système (1) comprend en outre au moins un premier système de tubes (7), qui est disposé entre l'isolation de bâtiment (5) et l'enveloppe extérieure (6), ainsi qu'au moins un deuxième système de tubes (8), qui est disposé entre l'isolation de bâtiment (5) et la paroi (4), sachant que les deux systèmes de tubes (7, 8) sont reliés à un circuit (10) dans lequel un fluide (11) peut circuler, **caractérisé en ce que** le premier système de tubes (7) est disposé dans l'isolation de bâtiment (5), directement accolé à l'enveloppe extérieure (6) et/ou **en ce que** le deuxième système de tubes (8) est disposé dans l'isolation de bâtiment (5), directement accolé à la paroi (4) ou dans la paroi (4), directement accolé à l'isolation de bâtiment (5) de telle sorte qu'il n'y a aucune paroi (4) entre les systèmes de tubes (7, 8).

2. Système selon la revendication précédente, **caractérisé en ce qu'**au moins un premier système de tubes (7) est respectivement relié au moyen de plaques thermoconductrices (19) à une surface active plus grande, de préférence à un plan et/ou au moins un deuxième système de tubes (8) est respectivement relié au moyen de plaques thermoconductrices (20) à une surface active plus grande, de préférence à un plan pour favoriser l'échange de chaleur.

3. Système selon la revendication 2, **caractérisé en ce que** les plaques thermoconductrices (19) du premier système de tubes (7) s'appliquent sur toute la surface à l'enveloppe extérieure (6) et/ou **en ce que** les plaques thermoncoductrices (20) du deuxième système de tubes (8) s'appliquent sur toute la surface à la paroi (4).

4. Système selon l'une quelconque des revendications précédentes, **caractérisé en ce que** le circuit (10) est au moins doté d'une pompe (9).

5. Système selon la revendication 4, **caractérisé en ce que** le premier système de tubes (7) comporte une première sonde de température (12) et le deuxième système de tubes (8) une deuxième sonde de température (13) et sachant que le système (1) comporte en outre une commande (14), laquelle est reliée à la première et à la deuxième sonde de température (12, 13) et à la pompe (9) pour la régulation de la circulation du fluide.

6. Système selon la revendication 5, **caractérisé en ce que** le bâtiment (2) comporte d'autres premiers et/ou deuxièmes systèmes de tubes (7, 8) avec des premières et deuxièmes sondes de température (12, 13), sachant que tous les systèmes de tubes (7, 8) sont reliés par des soupapes (15) au circuit (10) et sachant que la commande (14) est reliée à toutes les sondes de température (12, 13) et soupapes (15) pour la thermorégulation du bâtiment (2) selon nécessité.

7. Système selon l'une quelconque des revendications précédentes, **caractérisé par** un échangeur de chaleur (16) et un accumulateur de chaleur (17) pour l'accumulation de la chaleur reçue du système (1) et pour délivrer la chaleur accumulée dans l'accumulateur de chaleur (17) à un moment ultérieur.

8. Système selon l'une quelconque des revendications précédentes, **caractérisé en ce qu'**au moins un autre composant (18) thermo-actif est raccordé sur le circuit (10), en particulier une pompe à chaleur, un collecteur solaire, un registre terrestre et/ou un système de climatisation existant.

9. Système selon l'une quelconque des revendications précédentes, **caractérisé en ce que** l'enveloppe extérieure (6) est un revêtement d'une façade extérieure, des tuiles d'un toit ou une couverture d'un toit plat.

10. Procédé de thermorégulation d'un bâtiment (2) en utilisant un système (1) selon l'une quelconque des revendications précédentes **caractérisé en ce que** le fluide (11) est mis en circulation dans le circuit (10) par convexion ou au moyen d'une pompe (9), sachant que le fluide (11) reçoit de la chaleur de l'environnement d'un système de tubes (7, 8) et le délivre à nouveau dans l'environnement de l'autre système à tubes (8, 7).

11. Procédé selon la revendication 10 en utilisant un système (1), qui comporte en plus les caractéristiques selon la revendication 5, **caractérisé en ce que** la commande (14) pilote les soupapes (15) de telle manière que la température ambiante dans l'espace intérieur (3) zqt approchée d'une valeur de consigne.

12. Procédé selon la revendication 10 ou 11 en utilisant un système (1), qui comporte en plus les caractéristiques selon la revendication 5 ainsi que selon la revendication 6 ou 7, **caractérisé en ce que** la commande (14) pilote les soupapes (15) de telle manière que l'énergie thermique reçue dans le premier et deuxième système de tubes (7, 8) est provisoirement stockée et utilisée de façon intelligente.
